# EUROPÄISCHE PATENTSCHRIFT

(11) **EP 0 963 780 B1**
(45) Veröffentlichungstag und Bekanntmachung des Hinweises auf die Patenterteilung: **15.03.2006**
(21) Anmeldenummer: 98110443.3
(22) Anmeldetag: 08.06.1998
(51) Int. Cl.: B01D 53/85

(54) **Verfahren zur Entfernung von CO2 aus Verbrennungsabgasen, Konversion in CH4 und Speicherung ausserhalb der Erdatmosphäre**
Process for eliminating CO2 from combustion exhaust gases, conversion to CH4 and storage outside of the earth atmosphere
Procédé pour éliminer le CO2 des gaz d'échappement de combustion, conversion en CH4 et stockage en dehors de l'atmosphère terrestre

(43) Veröffentlichungstag der Anmeldung: 15.12.1999
(73) Patentinhaber: Wild-Vaucher, Pierrette, 6646 Contra (CH)
(72) Erfinder: Wild, Werner, 6646 Contra (CH)

(56) Entgegenhaltungen:
- EP-A- 0 377 405
- DE-A- 4 230 644
- US-A- 5 643 795

## Beschreibung

Neben dem aus technischen Anlagen und aus dem Boden natürlich entweichenden Methan ist Kohlendioxyd das wichtigste Treibhausgas. Es zerstört den Ozongürtel, der die Lebewesen auf der Erde vor zu intensiver Ultraviolettstrahlung schützt.

Seit rund einem Jahrzehnt suchen Technik und Wissenschaft nach Mitteln und Verfahren, um das zerstörerische CO₂ aus Abgasen zu entfernen und anschliessend entweder in unlöslicher Form zu binden oder ausserhalb der Erdatmosphäre zu speichern. Es bestehen inzwischen auch technisch machbare Vorschläge (die z.T. in Pilotanlagen erprobt worden sind), um das CO₂ aus den Abgasen abzutrennen, zu konzentrieren (verflüssigen), chemisch weiterzuverwenden oder unterirdisch zu deponieren (in Aquiferen, in der Tiefsee oder zur Austreibung produktionsträger Rohöle aus ihren Strukturen). Neben anderem wurde die Konzentration des CO₂ dadurch bewerkstelligt, dass das aus der Verbrennung stammende CO₂ im Nebenkreislauf in den Verbrennungsprozess zurückgeführt, nachdem zuvor der Stickstoff durch katalytische oder kältetechnische Verfahren aus der Verbrennungsluft ausgeschieden wurde. Anstelle der chemischen Weiterverwendung des CO₂ in benachbarten Industrien wurde auch die Bindung desselben z.B. an Algen pilottechnisch untersucht sowie die bakterielle Fermentation des CO₂ in Reaktoren zu CH₄. Diese letzten Verfahren setzen zu ihrer Anwendung entweder Speicherraum für das CO₂ resp. CH₄ oder einen absolut stationären Betrieb voraus, weil diese Bindungs- bzw. Fermentationsvorgänge nicht beliebig steuerbar sind. Gerade z.B. thermische Anlagen zur Elektrizitätserzeugung sollten jedoch zur Deckung von Tages-, Wochen- und Saisonspitzen sehr flexibel sein.

Die vorliegende Erfindung gestattet dieses Erfordernis.

In Anspruch 1 ist ein efindungsgemässes Verfahren beschrieben; die abhängigen Ansprüche stellen bevorzugte Ausführungen dar.

Das einzige der vorliegenden Erfindung nahekommende Verfahren wird in der deutschen Patentschrift DE 42 30 644 C2 vom 19.9.1996 beschrieben. Auch hier findet eine bakterielle Umwandlung des in den Abgasen enthaltenen CO2 zu CH4 derart statt, dass das CO2 in Wasser unter mässigem Druck gelöst und / oder in Teilemulsion in einem oberirdischen Reaktor in Suspension gehalten und unter Einfluss methanogener Bakterien in CH4 umgewandelt wird.

Sie zeichnet sich dadurch aus, dass das mit bekannten Mitteln aus dem Abgas abgetrennte, gereinigte, verflüssigte und getrocknete CO₂ über eine Fernleitung pumpbar gemacht und in einen benachbarten Aquifer, eine Erdgaslagerstätte oder eine Muttergesteinsstruktur eingepresst wird, wobei in den ersten beiden Fällen eine Impfung der geologischen Struktur durch entsprechende Bakterienkulturen (und ev. dazu gehöriges Substrat) vorausgeht. Im dritten Fall sind die methanogenen Bakterien sowie Substrat bereits natürlich vorhanden, sodassim Prinzip sofort eine Konversion des CO₂ in CH₄ einsetzen kann.

Dazu müssen die nachfolgenden Bedingungen entweder natürlich erfüllt sein oder künstlich geschaffen werden (siehe Literatur im Anhang):
1. Es muss genügend H₂ zur Reduktion des CO₂ (oder als Elektronspender) in der Struktur vorliegen, entweder
   - in freier Form aus metamorphem Gestein in der Tiefe, oder
   - durch bakterielle Direktübertragung aus organischem, H₂-haltigem Substrat, oder
   - aus bakterieller Aufspaltung des Porenwassers, oder
   - durch künstliche Zufuhr von H₂ in reiner Form, oder z.B. in Form von Ammoniak (NH₃), das in der Struktur mit dem Porenwasser teils Ammoniumhydroxyd NH₄OH und zusammen mit CO₂ Harnstoff (H₂N)₂CO bildet, der sich inter bakterieller unter Hydrolyse wieder spaltet und H₂ frei macht, oder
   - z.B. durch künstliche Einbringung von Formiaten NaHCO₂ oder CA(HCO₂)₂.
2. Der Sulfatgehalt des in der Struktur vorhandenen Sedimentes muss entweder
   - so weit erschöpft sein, dass das Sulfat nicht mehr selektiv den für die CO₂-Reduktion erforderlichen H₂ zur Sulfatreduktion abbindet, und/oder
   - es darf kein H₂S oder anderes Sulfid als methanogenes Gift wirken, oder
   - das die CO₂-Reduktion konkurrierende Sulfat wird durch einen Inhibitor(z.B. Na-Molybdat oder Fluorlaktat) künstlich blockiert, oder
   - es wird vor Beginn der CO₂-Einlagerung solange H₂ zugeführt, bis das Sulfat ausreichend reduziert ist.
3. Es muss eine genügend grosse methanogene Bakterienpopulation im Sediment vorhanden sein (z.B. Methanococcus, Methanobacterium formicicum, Methanobacterium thermoautotrophicum, Methanosarcina barkerii, oder andere photosynthetische Bakterien), die in der Lage ist,
   - freien H₂ aus dem Porenwasser oder aus H₂S abzuspalten, und
   - die CO₂-Reduktion in CH₄ ausreichend abzuwickeln,
   - eventuell unter Zusatz von Katalysatoren wie z.B. Palladium,
   - indem nötigenfalls die gewünschte Bakterienpopulation und/oder Substrat künstlich eingebracht werden.

Voraussetzung für das Gelingen der geplanten CO₂-Konversion ist zuerst das Niederbringen einer Bohrung (in einen Aquifer, eine Erdgaslagerstätte oder eine Muttergesteinsformation) durch die Gas oder Oel führende Struktur hindurch bis in die Wasserphase darunter, das Ziehen von Kernen aus den interessierenden Etagen und die Untersuchung der Kerne im Labor. Dabei spielen die gefundenen (oder nicht gefundenen) Bakterien, das Substrat, auf welchem sie leben, die chemische Zusammensetzung aller Sedimentbestandteile, das Vorhandensein von H₂, Sulfat sowie die Abwesenheit von Na-Al-Silikaten eine wichtige Rolle. Sind diese Erkenntnisse vorhanden, so wird festgestellt,unter welchen Bedingungen die vorhandenen (oder zugesetzten) Bakterien anaerob aus CO₂ mit dem gefundenen Substrat CH₄ produzieren und wieviel.

Durch Zusatz anderer Substrate (z.B. Acetate, Methanol, Methylamin, Dihydronicotinamid, Dihydro-5-Diazaflavin, 2-Mercapto-Aethan-Sulfonsäure u.a.m.) wird festgestellt, ob sich damit die CO₂-Reduktion zu CH₄ verstärken bzw. beschleunigen lässt. Bei gegebenem Substrat nimmt in Gegenwart von H₂ durch CO₂-Zugabe die CH₄-Produktion in der Regel um mehr als eine Grössenordnung zu. Dasselbe gilt, wenn in Gegenwart von CO₂ H₂ zugesetzt wird, d.h. es müssen beide Gase gleichzeitig vorhanden sein, um eine optimale CH₄-Produktion zu gewährleisten. Dabei stammen die für das CH₄ nötigen 4 H-Atome nicht aus dem zugefügten H₂-Gas (oder NH₃), sondern aus dem Porenwasser. Das H₂-Gas dient lediglich als Elektronspender. Bisherige Untersuchungen zeigen, dass Bakterien + Substrat offenbar nur Durchgangsstation für den zur CO₂-Reduktion erforderlichen H₂ sind. Infolgedessen ist im Labortest auch der allfällige Verbrauch von Bakterien und Substrat abzuklären, und zwar des natürlich vorhandenen Stoffes sowie des künstlich zugeführten.
Ist der Bakterien- und/oder Substratverbrauch hoch, so könnte für die praktische Anwendung des Verfahrens eine wirtschaftliche Grenze diktiert werden.

Sind diese Fragen durch die Tests geklärt, so erfolgen (immer noch im Labor) die gleichen Versuche unter in situ-Bedingungen (Druck, Temperatur). Die schrittweise Abklärung führt zur optimalen Methodik, die dann im Pilotversuch 1 : 1 im Feld nach Anlegung einer zweiten Bohrung (Beobachtungsbohrung) in relativer Nähe zur ersten erprobt wird.
Ist eine Fliessrichtung des Porenwassers vorhanden, so ist die Beprobung auf der Talseite der Fliessrichtung vorzunehmen und die CO₂-Einspeisung bergseits der Fliessrichtung. Nimmt der CH₄-Gehalt zu, so verläuft die Konversion positiv. Bestätigt wird dieser Befund, wenn auch der H₂-Gehalt zunimmt.

Dies ist besonders der Fall, wenn die Zugabe nicht in Form von reinem H₂, sondern als Ammoniak erfolgt. Die Umsetzungsgrundform CO₂ + 4 H₂ = CH₄ + 2 H₂O wird mit Ammoniak in molekularer Schreibweise zu 2 CO₂ + 6 NH₃ = 2 CH₄ + 3 N₂ + 4 H₂O + H₂, d.h. sie erfolgt mit einem H₂-Ueberschuss, der in die nächste Stufe übergeht, sodass sich im stationären Betrieb ein Gleichgewichtsverhältnis CO₂ : NH₃ von ca. 1 : 2,7 einstellt. Dies ist aber nur der Fall, wenn sich bei der H₂-Beschaffung keine bakterielle Assistenz einstellt, was kaum anzunehmen ist. Bakterielle Assistenz macht praktisch immer aus organischem Substrat oder aus Porenwasser weiteren H₂ frei, der - eventuell unterstützt durch H₂ aus metamorphen Gesteinen - rasch eine Reduktion des CO₂/NH₃-Verhältnisses von 2,7 auf gegen 1 und darunter bewirkt.

Die CO₂-Reduktion erzeugt in jedem Fall zusätzliches Porenwasser, wobei das NH₃ als H₂-Spender den besonderen Nachteil hat, dass nicht nur doppelt soviel Porenwasser wie bei Verwendung von reinem H₂ entsteht, sondern dass überdies 40 % des NH₃-Volumens (gasförmig) als N₂ (Ballast) in der Struktur verbleiben und gelegentlich als Verunreinigung mit dem produzierten CH₄ erscheinen, was langfristig eine Abtrennung des N₂ erforderlich macht. Wirtschaftlich könnte es deshalb sinnvoller sein, reinen H₂ unter hohem Druck als Emulsion in das flüssige CO₂ (mit oder ohne geeignete Emulgatoren) zu injizieren. Bei dem stöchiometrisch maximal möglichen Volumenverhältnis CO₂ : H₂ von 1 : 4 wird die Emulsion schaumförmig und bei geringerem H₂-Bedarf feinperlig werden. Dabei bleibt der H₂ immer gasförmig bei jedem praktisch vorkommenden Druck, das CO₂ aber flüssig.

Das flüssige Medium CO₂ benetzt die Rohrinnenwand und nicht der gasförmige H₂ und bildet so eine Schutzschicht, in welcher das Lösungsverhältnis H₂ : CO₂ (Volumen) rd. 1 : 100 beträgt (bei üblichen Druck- und Temperaturbedingungen) und auf diese Weise den Stahl vor Wasserstoffsprödigkeit schützt. Wesentlich für den beabsichtigten Schutz ist die Aufrechterhaltung einer turbulenten Strömung, damit die CO₂/H₂-Emulsion nicht in sich zusammenfällt. Ausserdem sind die in Betracht zu ziehenden Temperaturen im Untergrund (bis ca. 80°C) nicht so hoch, dass sie Wasserstoffsprödigkeit provozieren (über 300°C). Wegen der Unkontrollierbarkeit langer Transportstrecken über eine Fernleitung müsste die H₂-Bereitung jedoch im Feld - am besten an jeder Injektionssonde - stattfinden. Hingegen ist die selbsttätige Reduktion des CO₂ zu CH₄ im Gemisch CO₂/H₂ noch in der Injektionsleitung bei den vorherrschenden Temperaturen nicht zu befürchten.

H₂-, Bakterien- und/oder Substrat-Zusatz ist bei der Verwendung eines Aquifers als Konversionsmilieu praktisch unerlässlich, bei Verwendung eines durch Migration in einer geologischen Falle entstandenen Erdgasvorkommens eventuell notwendig und bei Verwendung einer Erdölmuttergesteinsformation kaum nötig. Die allfälligen Zugaben neben CO₂ (NH₃, H₂, Bakterien, Substrat, Katalysatoren, Inhibitoren) dürfen das Grundwasser von Aquiferen, die über dem Brackwasserbereich liegen, nicht beeinträchtigen. Bei tiefliegenden Aquiferen im Brackwasser spielt dieser Aspekt eine untergeordnete Rolle.

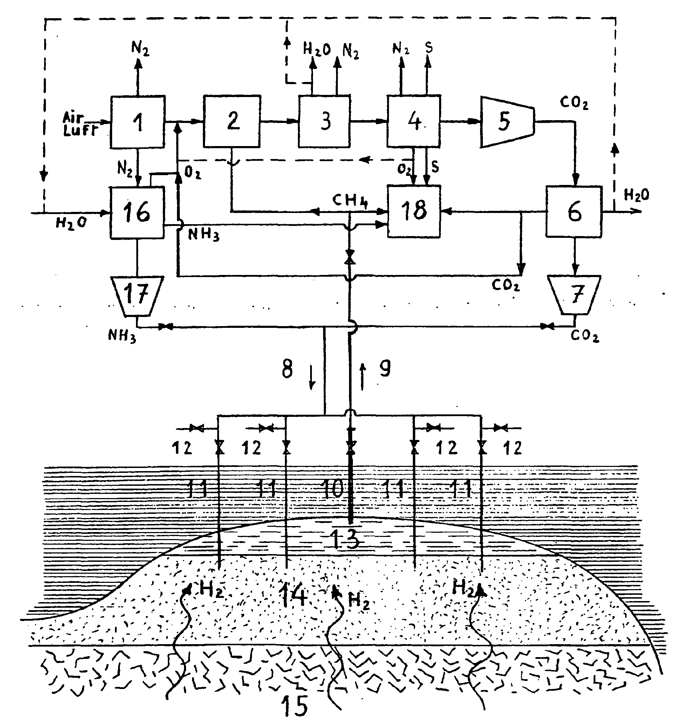

In der Figur ist beispielhaft und schematisch an einer Antiklinal struktur eine moderne Anlage im Sinne des Erfindungsgedankens dargestellt, und zwar als Prozessphasen: Im ganzen Prozess wird N₂ als Ballast betrachtet; er wird in der Phase 1 katalytisch oder kryogen durch Luftzerlegung ausgeschieden, entweder direkt in die Atmosphäre oder dann z.B. in eine NH₃-Anlage 16. Zurück bleiben O₂, Luft-CO₂, Edelgase und Unreinigkeiten, die in der Verbrennungsanlage 2 (Gasturbine, Heizkessel, Gasmotor etc.) anschliessend verbrannt werden. In der Trennungsanlage 3 werden das Verbrennungsprodukt H₂ und CO₂ sowie N₂ (Rest-N₂ oder sämtlicher N₂ ohne Phase 1) voneinander getrennt. In der Katalysatoranlage 4 werden die Stickoxyde NOx, die Schwefeloxyde (SO₂) und Kohlenmonoxyd CO zu N₂, elementarem Schwefel S, O₂ und CO₂ reduziert bzw. oxydiert, sodass praktisch reines CO₂ in den Kompressor 5 gelangt. Hier wird das CO₂ verflüssigt, anschliessend gekühlt (nicht gezeichnet) und gelangt in den Vorratsbehälter 6. Das ausfallende H₂O kann in die Umwelt abgegeben oder in den Prozess zurückgeführt werden. Ebenfalls in den Prozess zurückgeführt werden kann aus dem Behälter 6 (wenn eine Lufttrennung in Phase 1 vorhanden ist) das CO₂ zum Brenngas, welches dann in einer O₂/CO₂-Atmosphäre verbrennt.

Unter der Annahme, dass in der unterirdischen Speicher- und Konversionsstruktur 13, 14 kein oder nur ungenügend H₂ vorliege, um eine ausreichende Reduktion des CO₂ zu ermöglichen, ist dem Prozess eine Ammoniakanlage 16 zugeschaltet. Der für das NH₃ nötige Stickstoff N₂ steht aus der Phase 1 zur Verfügung, der nötige H₂ aus Frischwasser, und der abgetrennte O₂ wird in den Verbrennungsprozess in 2 geschickt. CO₂ und NH₃ werden in den Kompressoren 7 bzw. 17 auf identischen Hochdruck gepumpt. Im Gemisch fliessen sie anschliessend über die Fernleitung 8 zum Speicherfeld 13. Ob im Gemisch CO₂/NH₃ schon während des Transportes teilweise Harnstoff (H₂N)₂CO entsteht, ist nur insofern von Bedeutung, als als Nebenprodukt auch H₂O anfallen würde, das zusammen mit CO₂ das saure H₂CO₃ liefert (Innenkorrosion der Fernleitung). Gleichzeitig bildet das NH₃ mit H₂O aber basisches NH₄OH, d.h. neutralisiert - mindestens teilweise - das H₂CO₃. Eine Ueberwachung und allfällige Zugabe eines Korrosionsinhibitors könnte angezeigt sein. Eine weitere mögliche Lösung bestünde darin, CO₂ und NH₃ schubweise (wie in Pipelines üblich) einzupumpen.

Gemäss der Erfindungsidee dient das Speicherfeld (Aquifer, Lagerstätte) als Konversionsreaktor für das CO₂: Die Injektionsbohrungen 11 für das CO₂, den H₂ (oder NH₃) werden so um die Entnahmebohrung 10 für das CH₄ angeordnet, dass ein zentraler Zufluss entsteht. In der Figur ist eine Abwicklung des Schnittes durch die im Viereck um die Bohrung 10 abgeteuften Injektionsbohrungen dargestellt. Die Injektionsbohrungen 11 reichen dabei bis in den Porenwasser führenden Teil 14 der Antiklinale, weil die Reduktion des CO₂ zu CH₄ dort stattfindet. Zur Ziehung der weiter oben genannten Kerne für die Labortests wird ursprünglich auch die Bohrung 10 bis in den Wasserteil 14 abgeteuft und später in der gezeichneten Lage zementiert und perforiert. Das aus dem CO₂ produzierte CH₄ speichert sich zuerst im Wasserteil 14 bis mit dem Gasteil 13 Kontakt und eine durchgehende Verbindung der Gasphase entsteht. Während der weiter oben beschriebenen in situ-Tests im Masestab 1 : 1 reicht die Bohrung 10 noch bis in den Wasserteil 14. Durch geringen Ueberdruck treiben die Injektionsbohrungen 11 das produzierte CH₄ gegen die Entnahmebohrung 10. Diese Technik wird auch beim Einpressen von CO₂ in produktionsträge Erdölstrukturen angewendet. Von hier stammt übrigens eine reiche Erfahrung inbezug auf die Reservoirverträglichkeit des CO₂.

Jede Injektionsbohrung 11 besitzt einen Stutzen 12 zum Einpumpen separater Zugaben an Bakterien, Substraten, Inhibitoren und/oder Katalysatoren. Die Entnahmebohrung 10 mündet an ihrem Kopf in die Erdgasfernleitung 9 und diese an ihrem anderen Ende in die Verbrennungsanlage 2. Unter dem Aquifer 14 mit der Gaslagerstätte 13 befindet sich die Gebirgebasis 15, aus welcher gegebenenfalls genügend H₂ aus metamorphem Gestein in der Tiefe nach oben diffundiert.

Der Betrieb der Feldanlage ist in vielem ähnlich jenem eines Erdgasspeichers mit Injektions- und Entnahmebohrungen. Da sich die Volumen des verbrauchten CH₄ und des daraus entstehenden CO₂ theoretisch (bis auf kleine Verlustmengen) gleich sind, bleibt der Druck des Speichers 13 (oder Konversionsreaktors) sehr lange Zeit erhalten, weil praktisch ein geschlossener Kreislauf CH₄-CO₂ vorliegt. Nachzuliefern sind nur der H₂-Spender (z.B. NH₃), Katalysatoren, Inhibitoren und eventuell Bakterien und Substrat. Erdgas wird auf diese Weise zur erneuerbaren Energie.

In der Figur wurden aus Gründen der Uebersichtlichkeit nicht dargestellt: Pumpen und Kompressoren für reine Förder- und Umlaufzwecke zwischen den Prozessphasen, Kühler, Abscheider, Ausgleichsbehälter und Regulierorgane.

Der Vollständigkeit halber enthält die Figur dem thermischen Kraftwerk 2 benachbarte Industrien 18, welche sowohl CH₄, CO₂ und übrige Nebenprodukte weiterverwenden können. Damit entsteht eine optimale Ausnützung bei hoher Flexibilität.

### Anhang

### Literaturverzeichnis:

1. Origin of Hydrogen in Methane Produced by Methanobacterium thermoautotrophicum
   L. Daniels, G. Fulton, R.W. Spencer, W.H. Orme-Johnson
   J. Bacteriol. 141, 2 (1980), 694-698
2. Hydrogen as a Substrate for Methanogenesis and Sulphate Reduction in Anaerobic Saltmarsh Sediment
   J.W. Abram, D.B. Nedwell
   Arch. Microbiol., 117 (1978), 93-97
3. Bacterial Methanogenesis in Holocene Sediments of the Baltic Sea
   A.Y. Lein, B.B. Namsaraev, V.Y. Trotsyuk, M.V. Ivanov Geomicrobiol. J., 2, 4 (1981), 299-315
4. Effect of Sulfate on Carbon and Electron Flow During Microbial Methanogenesis in Freshwater Sediments
   M.R. Winfrey, J.G. Zeikus
   Appl. Environ. Microbiol., 33, 4 (1977), 275-281
5. Association of Hydrogen Metabolism with Methanogenesis in Lake Mendota Sediments
   M.R. Winfrey, D.R. Nelson, S.C. Klevickis, J.G. Zeikus Appl. Environ. Microbiol., 33, 2 (1977), 312-318
6. Methane release from soils of a Georgia salt marsh G.M. King, W.J. Wiebe
   Geochim. Cosmochim. Acta, 42 (1978), 343-348
7. Inhibition of Methanogenesis by Sulphate Reducing Bacteria Competing for Transferred Hydrogen
   J.W. Abram, D.B. Nedwell
   Arch. Microbiol., 117 (1978), 89-92
8. Kinetic Analysis of Competition Between Sulfate Reducers and Methanogens for Hydrogen in Sediments
   D.R. Lovley, D.F. Dwyer, M.J. Klug
   Appl. Environ. Microbiol., 43, 6 (1982), 1373-1379
9. Experiments on the Methane Bacteria in Sludge R.L. Mylroie, R.E. Hungate
   Can. J. Microbiol., 1 (1954), 55-64
10. Sulfate reduction and methanogenesis in marine sediments R.S. Oremland, B.F. Taylor
   Geochim. Cosmochim. Acta, 42 (1978), 215-217

## Patentansprüche

1. Verfahren zur Entfernung von CO2 aus Abgasen von Verbrennungsanlagen, wobei das CO2 eine bakterielle Konversion zu CH4 erfährt, daduroh gekennzeiohnet, dass die Konversion (Reduktion) des CO2 zu CH4 sowie die Speicherung beider Gase innerhalb der porösen oder feinkluftigen Struktur eines unterirdischen Aquifer, einer unterirdischen Erdgaslagerstätte oder einer unterirdischen Erdölmuttergesteinsformation (13,14) erfolgt, die mindestens nach oben von einer dichten Struktur abgeschlossen sind.

2. Verfahren nach Anspruch 1, **dadurch gekennzeichnet, dass** das CO2 mittelst einer oder mehrerer Tiefbohrungen (11) in die unterirdische poröse Struktur (13, 14) eingepresst wird, wobei die Tiefbohrungen (11) bis in die in der porösen oder feinkluftigen Struktur (13, 14) vorhandene Wasserphase (14) reichen.

3. Verfahren nach Anspruch 1 oder 2, **dadurch gekennzeichnet, dass** die Konversion des CO2 zu CH4 begünstigende Stoffe wie methanogene Bakterien, organischen H2 enthaltendes Substrat und/oder H2-Gas oder NH3, Katalysatoren und/oder Inhibitoren bei der Einpressung zum CO2 zugegeben werden, insbesondere über Stutzen (12) an den Tiefbohrungen (11).

4. Verfahren nach einem der Ansprüche 1 bis 3, **dadurch** gekennzeiohnet, dass das CO2 flüssig in die unterirdische Struktur (14) eingepresst wird.

5. Verfahren nach Anspruch 3 und 4, **dadurch gekennzeichnet, dass** der H2 im flüssigen CO2 eine schaumförmige oder feinperlige Emulsion bildet.

6. Verfahren nach Anspruch 1, **dadurch gekennzeichnet, dass** das aus dem CO2 gebildete CH4 an Hochpunkten der dichten, unporösen Abdeckstruktur aus der Gasphase (13) entnommen und zur Wiederverwendung der ursprünglichen Verbrennungsanlage oder anderen CH4 verbrauchenden Anlagen zugeführt wird.

## Claims

1. Process for eliminating CO2 from combustion exhaust gases by bacterial conversion of the CO2 to CH4, wherein the conversion (reduction) of the CO2 to CH4 as well as the storage of both gases takes place within the porous or finely split structure of an underground aquifer, an underground gas reservoir or an underground oil bearing rock formation (13, 14) being covered, at least towards the top, by a tight structure.

2. Process according to claim 1, wherein the CO2 is injected, by means of one or more drillings (11), into the underground porous structure (13, 14), being traversed by the drillings (11) which reach the aquatic phase (14) in the porous or finely split structure (13, 14).

3. Process according to claims 1 or 2, wherein the conversion of CO2 to CH4 is favoured by adding to the CO2 substances as methanogenic bacteria, substrate containing organic H2 and/or gaseous H2 or NH3, catalysators and/or inhibitors, by means of a nozzle (12) on the drilling tube (11).

4. Process according to one of the claims 1 to 3, wherein the CO2 is injected in liquid state in the underground structure (14).

5. Process according to claims 3 and 4, wherein the H2 forms an emulsion, within the liquid CO2, in the kind of a foam or small bubbles.

6. Process according to claim 1, wherein the CH4 produced out of the CO2 is gathered from the gaseous phase (13) at the high points of the tight and nonporous cover structure and conveyed for re-use to the initial combustion plant or to other CO2 consuming installations.

## Revendications

1. Procédé pour éliminer le CO2 de gaz d'échappement d'installations de combustion en convertissant bactériennement le CO2 en CH4, **caractérisé en ce que** la conversion bactérienne (réduction) du CO2 en CH4 ainsi que le stockage des deux gaz se fait à l'intérieur de la structure poreuse ou finement fissurée d'un aquifère souterrain, d'un gisement de gaz naturel souterain ou d'une structure souteraine de roche-mère pétrolifère (13, 14), étant couverts, au moins par le haut, d'une structure étanche.

2. Procédé selon la revendication 1, **caractérisé en ce que** le CO2 est injecté dans la structure souterraine poreuse (13, 14), au moyen d'un ou de plusieurs forages (11) qui, à travers la structure poreuse ou finement fissurée (13, 14) atteignent la phase aqueuse (14) dans la structure poreuse.

3. Procédé selon les revendications 1 ou 2, **caractérisé en ce que** des substances favorisant la conversion du CO2 en CH4, comme des bactéries méthanogènes, de substrate contenant H2 organique et / ou H2 gazeux ou NH3, catalyseurs et / ou inhibiteurs sont adjoints pendant l'injection du CO2 à travers des manchons (12) sur les forages (11).

4. Procédé selon une des revendications 1 à 3, **caractérisé en ce que** le CO2 est injecté dans la structure (14) en état liquide.

5. Procédé selon les revendications 3 et 4, **caractérisé en ce que** le H2 forme une émulsion écumeuse ou finement bulleuse dans le CO2 liquide.

6. Procédé selon la revendiaction 1, **caractérisé en ce que** le CH4 formé du CO2 est soutiré de la phase gazeuse (13) aux points hauts de la structure de couverture étanche pour être reconduit dans l'installation de combustion initiale ou dans une autre installation utilisant du CH4.
